# EUROPEAN PATENT APPLICATION

(11) **EP 1 713 190 A1**
(43) Date of publication of application: **18.10.2006**
(21) Application number: 05290841.5
(22) Date of filing: 15.04.2005
(51) Int. Cl.: H04B 10/08, H04B 10/20, H04J 14/02

(54) **An optical network configuration for transmiting optical signals**

(71) Applicant: ALCATEL, 75008 Paris (FR)
(72) Inventor: Pfeiffer, Thomas, 70569 Stuttgart (DE)
(74) Representative: Schäfer, Wolfgang

(57) **Abstract**

An optical network configuration (12) for transmitting optical signals is described. The optical network configuration (12) comprises an entry point (15) for coupling the optical network configuration (12) to another network configuration (11), and an optical trail (16) for transmitting data signals within the optical network configuration (12). The entry point (15) comprises an optical filter (23) for coupling the other network configuration (11) and the optical trail (16).

## Description

The invention relates to an optical network configuration for transmitting optical signals according to the preamble of claim 1. Furthermore, the invention relates to a method of monitoring an optical trail of an optical network configuration according to the preamble of claim 6.

It is known that providers not only rent specific telecommunication devices to customers but even entire network configurations. In connection with optical transmissions, these network configurations are often called "dark trails" or "dark fibers". These optical network configurations comprise one or more optical trails for carrying a number of data transmission channels that can be used by the customer. The provider, however, usually has no access to these channels.

In order to monitor the optical trail with regard to failures or defects, it would be possible to use one of the channels for monitoring purposes. Apparently, this would reduce the bandwidth being available to the customer.

It is an object of the invention to provide an optical network configuration for transmitting optical signals and a method of monitoring an optical trail of an optical network configuration that allow to monitor the optical trail of the optical network configuration without having access to the channels and without sacrificing one of these channels.

This object is solved by the optical network configuration according to claim 1 and by the method of monitoring an optical trail according to claim 6.

According to the invention, the optical network configuration comprises an entry point for coupling the optical network configuration to another network configuration. Furthermore, the optical network configuration comprises an optical trail for transmitting data signals within the optical network configuration. Furthermore, the entry point comprises an optical filter for coupling the other network configuration and the optical trail.

These features allow to couple the optical network configuration, i.e. the "dark trail", to another network configuration under decoupled conditions. In particular, the optical filter ensures that the "dark trail" receives defined signals at its entry point and that the other network configuration.

Furthermore, these features enable the possibility to monitor the "dark trail" without having access to it and without sacrificing one of its channels. For that purpose, the entry point may comprise an optical time domain reflectometer (in the following abbreviated as OTDR) for feeding a monitoring signal to the optical trail.

According to the invention, a monitoring signal is generated and fed into the optical trail at the entry point of the optical network configuration. As well, a reflected signal is received at the entry point. An optical characteristic of the optical trail is evaluated based on the received signal.

With this method, the provider of a "dark trail" is able to monitor the optical network configuration rent to the customer, without having access to it. Preferably, the provider may carry out the described method within one of the entry points of the optical network configuration.

In an embodiment of the invention, the monitoring signal is superposed to a data signal that is transmitted on the optical trail. This feature has the advantage that no channel has to be sacrificed for monitoring purposes. Furthermore, it may be advantageous that the power spectral density of the monitoring signal is small compared to the power spectral density of the data signal and that monitoring signal is widely spread over the wavelengths.

In another embodiment of the invention, an optical time domain reflectometer (in the following abbreviated as OTDR) coupled to an evaluation unit is adapted to carry out the described method. Using these features provides the advantage that known algorithms may be used to evaluate the optical characteristic of the optical trail.

Further features, applications and advantages of the invention will become apparent from the following description of exemplary embodiments of the invention that are shown in the drawings. There, all described and shown features separately or in any combination represent the subject matter of the invention, independently of the wording in the description or the representation in the drawings and independently of the combination of the features in the claims or the dependencies of the claims.

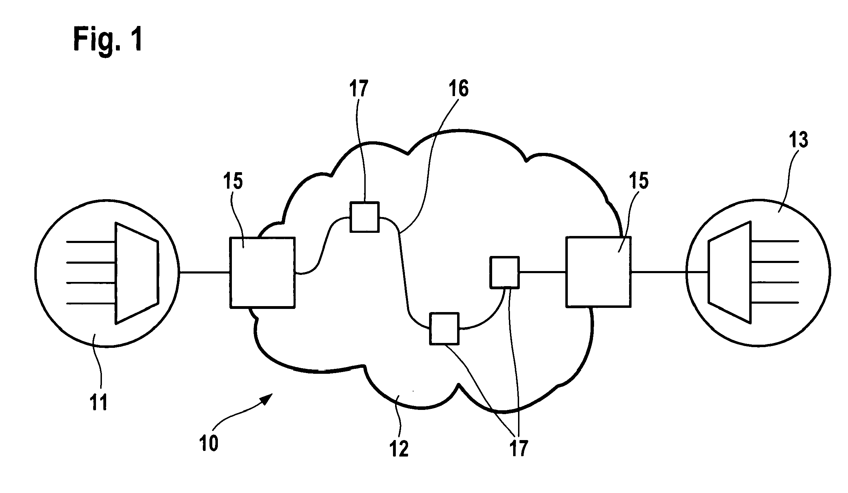

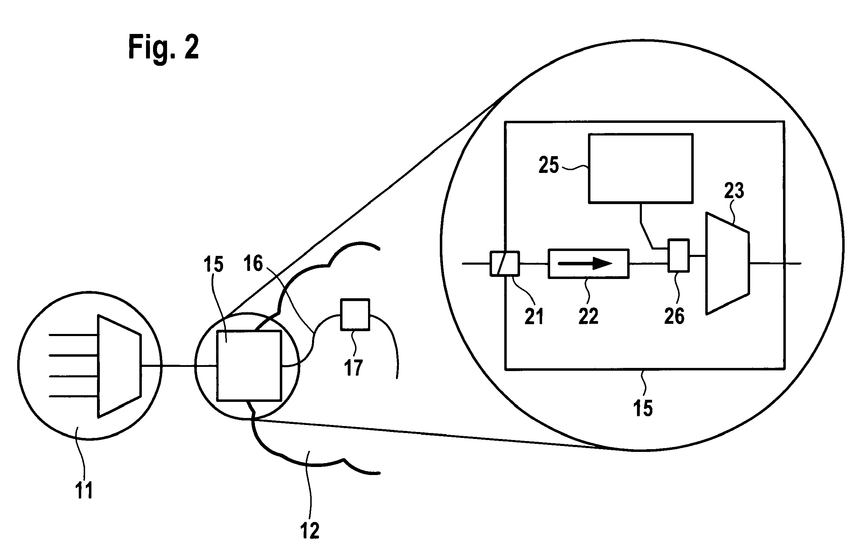

Figure 1 shows a schematic block diagram of an embodiment of a telecommunication network comprising an optical network configuration according to the invention, figure 2 shows a schematic block diagram of an embodiment of an entry point of the optical network configuration of figure 1, and figures 3 and 4 show schematic diagrams of examples of optical signals of the optical network configuration of figure 1.

In figure 1, a telecommunication network 10 is shown that comprises a first network configuration 11, an optical network configuration 12 and a second network configuration 13. The optical network configuration 12 is coupled to each one of the first and the second network configuration 11, 13. Alternatively, it is possible that only a single network configuration is present that is coupled to the optical network configuration 12.

The first and the second network configuration 11, 13 may be implemented as an active and/or multiplexed and/or any other kind of telecommunication infrastructure. The optical network configuration 12 is built up by a passive fiber infrastructure.

The optical network infrastructure 12 comprises two entry points 15 that establish a connection between the optical network configuration 12 and the first and the second network configuration 11, 13, respectively. Furthermore, the optical network configuration 12 comprises an optical trail 16 that interconnects the two entry points 15 of the optical network configuration 12. The optical trail 16 may be implemented by one or more fibers. If necessary, the optical trail 16 may comprise one or more optical nodes 17 in order to couple the optical trail 16 with other optical trails of the optical network configuration 12.

In figure 2, the entry point 15 of the optical network configuration 12 is shown in more detail. The entry point 15 of figure 2 may be used for coupling the optical network configuration 12 to the first and the second network configuration 11, 13, respectively.

The entry point 15 comprises a connector 21 for coupling the entry point 15 to the first or second network configuration 11, 13. Furthermore, the entry point 15 comprises an optical isolator 22 and an optical filter 23. The connector 21, the isolator 22 and the filter 23 constitute a serial connection. The output of the optical filter 23 is coupled to the optical trail 16 of the optical network configuration 12.

The connector 21 has the purpose to forward an optical signal into the entry point 15. The optical isolator 22 has the purpose to avoid that unwanted optical signals, so-called spur signals, can flow out of the entry point 15 back into the first or second network configuration 11, 13. Insofar, the optical isolator 22 has a function comparable to an electrical diode. If the optical trail 16 carries optical signals in both directions, the optical isolator 22 is not present or is adapted to this embodiment.

The optical filter 23 has the purpose to shape well-defined optical signals flowing into the optical trail 16 of the optical network configuration 12. The optical filter 23 may be realized by known optical devices. In an alternative embodiment, the optical filter 23 may be implemented by a multiplexer. As well, the optical filter 23 may be combined with an optical splitter.

According to figure 2, the entry point 15 of the optical network configuration 12 comprises an optical time domain reflectometer 25, in the following abbreviated as OTDR. As a possible embodiment, the OTDR 25 may comprise a light emitting diode and a photosensitive element. If the optical trail 16 only carries optical signals in one direction, then the OTDR 25 must only be present within that entry point 15 which feeds the optical signals into the optical network configuration 12.

The output of the OTDR 25 is coupled to an optical splitter 26 which is located between the optical isolator 22 and the optical filter 23. The optical splitter 26 has the purpose to combine the optical signals coming from the optical isolator 22 and from the OTDR 25 and to forward the optical signals in the opposite direction.

On the optical trail 16, one or more data transmission channels may be established. For a passive fiber trail, the wavelengths of these channels may be chosen, for example, in the range of 1260 nm to 1625 nm.

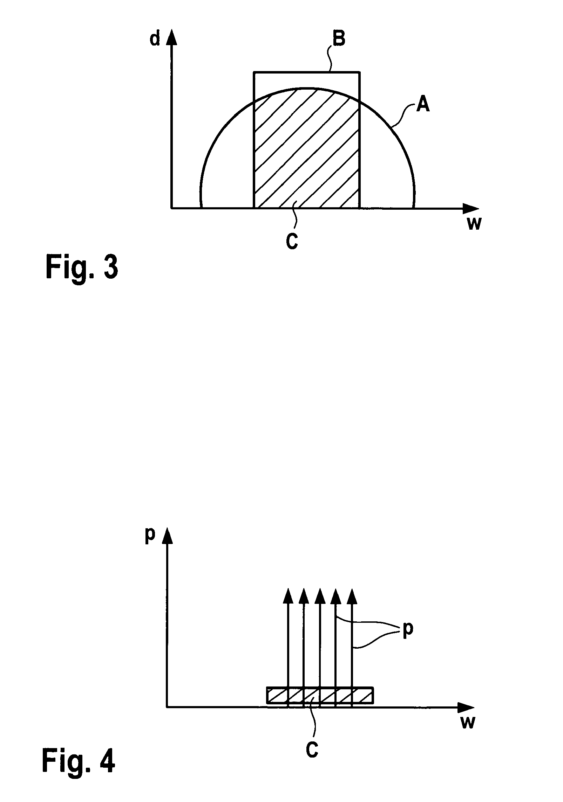

In figure 3, the optical power density d of the OTDR 25 is shown as a function of the wavelength w. The OTDR 25 generates a spectrum A as shown in figure 2. This spectrum A increases and then decreases again with increasing wavelengths w wherein the total optical power of the OTDR 25 preferably is high. Furthermore, a given passband B is shown in figure 3. This passband B is assumed to have almost upright rising and falling edges. The optical filter 23 is adapted to realize this passband B.

Due to the passband B of the optical filter 23, the spectrum A of the OTDR 25 is limited to the hatched area C of figure 3 at the output of the optical filter 23. Therefore, this hatched area C is available as the optical power of the signal generated by the OTDR 25 and forwarded into the optical trail 16 of the optical network configuration 12.

In figure 4, the optical power p of the signals on the optical trail 16 is shown as a function of the wavelength w.

On the optical trail 16 of the optical network configuration 12, a number of signals within the one or more data transmission channels are transmitted that are shown as arrows P in figure 4. In the following, these signals are called data signals. Furthermore, there is the signal generated by the OTDR 25 and forwarded into the optical trail 16 that is shown as the hatched area C in figure 4. In the following, this signal is called monitoring signal. The monitoring signal is superposed to the data signals.

The data signals are fed into the optical trail 16 at one end and are received at the other end. There, the received data signals must be detectable, i.e. it must be possible to generate the identical bit sequence at the receiving end of the optical trail 16 that was fed to the optical trail 16 at its feeding end.

The monitoring signal is used to examine the optical trail 16 with regard to actual defects or upcoming failures. For that purpose, the OTDR 25 is coupled to an evaluation unit (not-shown). Controlled by this evaluation unit, the OTDR 25 generates and feeds the monitoring signal into the optical trail 16. At the same time, the same OTDR 25 detects all those signals that are back-scattered from the optical trail 16. The OTDR 25 therefore receives all reflections or back-scatterings of the monitoring signal on its way along the optical trail 16. These received back-scattered signals are forwarded to the evaluation unit for the following further processing.

Under defined conditions, in particular under the condition that the optical trail 16 does not include any failures or defects and therefore has defined optical characteristics, it is possible to predict those signals that are received by the OTDR 25. However, due to the fact that the actual optical trail 16 does not have the afore-mentioned defined characteristics, e.g. due to defects or the like, the signals actually received by the OTDR 25 may be different. The actually received signals are examined by the OTDR 25 and the optical characteristics of the optical trail 16 are evaluated using known algorithms.

In addition, it is possible to carry out comparisons of the actually received signals and the predicted signals in order to evaluate the optical characteristics of the optical trail 16. As well, it is possible to carry out comparisons of the actually received signals and formerly received signals in order to evaluate the optical characteristics of the optical trail 16.

Of course, the monitoring signal may influence the detectability of the data signals at the receiving end of the optical trail 16. As well, the data signals also have reflections on their way along the optical trail 16 which may influence the detectability of the optical characteristics of the optical trail 16 by the OTDR 25.

In order to reduce the afore-described impacts of the monitoring signal on the data signals and vice versa, the following measures are taken.

As can be taken from figure 4, the power spectral density of the monitoring signal is small compared to the power spectral density of the data signals. For example, the power spectral density of the monitoring signal may amount to about 2 percent of the power spectral density of the data signals. At the same time, the monitoring signal is widely spread along the wavelength s.

For that purpose, the OTDR 25 and the optical filter 23 are adapted such that the monitoring signal is generated over a wide spread area of the wavelengths w, and that it has a low power spectral density compared to the data signals. Thus, the monitoring signal is present in most or all of the one or more data transmission channels on the optical trail 16 of the optical network configuration 12 without having a significant influence on the data signals within these channels.

In a first embodiment, the monitoring signal comprises single pulses having a duration of e.g. 300 ns and being sent e.g. every 500 µs. Under defined conditions, this monitoring signal should result in a signal received by the OTDR 25 that is predictable. However, due to defects or the like on the optical trail 16, the actually received signal may be different. As already outlined, known algorithms may be used to evaluate the optical characteristics of the optical trail 16 based on the actually received signals.

In a second embodiment, a modulation of the monitoring signal is carried out which is based e.g. on a frequency swept sine wave. The received signals are examined stepwise at constant frequencies. As the interesting frequency range, the spectral range of the Fourier transform of the single pulse of the first embodiment may be used. Then, a Fourier transformation is applied. The described procedure, therefore, is comparable to the procedures usually performed by a network analyzer. As a result, the data signals almost have no influence on the monitoring signal.

In a third embodiment, the single pulses are modulated using a high frequency, for example 10 MHz. The received signals are then processed in a first step with regard to the detection of the high frequency in order to evaluate in a second step the modulated single pulses.

In further embodiments, the described possibilities may be used to generate digital bit patterns. The OTDR 25 then feeds these bit patterns into the optical trail 16 as the monitoring signal. Using known algorithms, it is then possible to evaluate the optical characteristics of the optical trail 16.

In all these embodiments, it is possible to detect the monitoring signal almost without any influence of the data signals. Therefore, the evaluation of the monitoring signal with regard to the characteristics of the optical trail 16 is almost not influenced by the data signals.

## Claims

1. An optical network configuration (12) for transmitting optical signals, comprising an entry point (15) for coupling the optical network configuration (12) to another network configuration (11, 13), and an optical trail (16) for transmitting data signals within the optical network configuration (12), **characterized in that** the entry point (15) comprises an optical filter (23) for coupling the other network configuration (11, 13) and the optical trail (16).

2. The optical network configuration (12) of claim 1 wherein the entry point (12) comprises an optical time domain reflectometer (in the following abbreviated as OTDR) (25) for feeding a monitoring signal to the optical trail (16).

3. The optical network configuration (12) of claim 2 wherein the OTDR (25) is coupled to the filter (23), in particular by an optical splitter (26).

4. The optical network configuration (12) of claim 1 wherein an optical isolator (22) is provided, wherein the isolator (22) and the filter (23) are connected in series.

5. A telecommunication network (10) comprising an optical network configuration (12) according to claim 1.

6. A method of monitoring an optical trail (16) of an optical network configuration (12) **characterized in that** a monitoring signal is generated and fed into the optical trail (16) at an entry point (15) of the optical network configuration (12), that a reflected signal is received at the entry point (15), and that an optical characteristic of the optical trail (16) is evaluated based on the received signal.

7. The method of claim 6 wherein the monitoring signal is superposed to a data signal that is transmitted on the optical trail (16).

8. The method of claim 7 wherein the power spectral density of the monitoring signal is small compared to the power spectral density of the data signal.

9. The method of claim 6 wherein the monitoring signal is present widely spread over the wavelengths.

10. The method of claim 6 wherein the monitoring signal comprises a single pulse.

11. The method of claim 10 wherein the monitoring signal is modulated using a frequency swept sine wave.

12. The method of claim 6 wherein the monitoring signal comprises a single pulse that is modulated using a high frequency.

13. The method of claim 6 wherein the monitoring signal comprises a bit pattern built up of a number of pulses.

14. The method of claim 6 wherein an optical time domain reflectometer (in the following abbreviated as OTDR) (25) is used for generating the monitoring signal and for receiving the reflected signal.

15. An optical device coupled to an evaluation unit, **characterized in that** the device and the evaluation unit are adapted to carry out the method according to claim 6.

16. The device of claim 15 wherein the device is comprised in the entry point (15) of the optical network configuration (12).

17. The device of claim 15 wherein the device is an optical time domain reflectometer (25).
